# EUROPEAN PATENT APPLICATION

(11) **EP 3 323 478 A1**
(43) Date of publication of application: **23.05.2018**
(21) Application number: 16199916.4
(22) Date of filing: 22.11.2016
(51) Int. Cl.: A63F 13/54, H04S 7/00

(54) **AN APPARATUS AND ASSOCIATED METHODS**

(71) Applicant: Nokia Technologies Oy, 02610 Espoo (FI)
(72) Inventor: ERONEN, Antti, 33820 Tampere (FI); VILERMO, Miikka, 37200 Siuro (FI); LEHTINIEMI, Arto, 33880 Lempäälä (FI); LEPPÄNEN, Jussi, 33580 Tampere (FI)
(74) Representative: Nokia EPO representatives

(57) **Abstract**

Based on virtual reality content including at least one audio track that is for audible presentation to a user with a spatial audio effect configured such that the audio is audibly perceived to originate from an origin location in the virtual reality space, the audio track associated with an object viewable in the video imagery;
provide for audio presentation of the audio track with one or more of;
(i) a spatial audio effect that places the origin location of the audio track at a point within a boundary of the object and provides for movement of the origin location within the boundary of the object based on changes in a view point of the video imagery relative to the object; and
(ii) a spatial audio effect that places the origin location over a region extending across at least part of the boundary of the object viewable in the video imagery.

## Description

### Technical Field

The present disclosure relates to the field of virtual reality and, in particular, to the presentation of spatial audio in virtual reality content. Associated methods, computer programs and apparatus is also disclosed. Certain disclosed aspects/examples relate to portable electronic devices.

### Background

Virtual reality may use a headset, such as glasses or goggles, or one or more displays that surround a user to provide the user with an immersive virtual experience. A virtual reality apparatus may present multimedia virtual reality content representative of a virtual reality space to a user to simulate the user being present within the virtual reality space. The virtual reality space may be provided by a panoramic video, such as a video having a wide or 360° field of view (which may include above and/or below a horizontally oriented field of view). Spatial audio comprising sound that appears to originate at a particular origin location may also be provided as part of the consumption of virtual reality.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising:
at least one processor; and
at least one memory including computer program code,
the at least one memory and the computer program code configured to, with the at least one processor, cause the apparatus to perform at least the following:
in respect of virtual reality content comprising video imagery, the video imagery presented in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on the virtual reality content including at least one audio track comprising audio that is for audible presentation to a user with a spatial audio effect configured such that the audio is audibly perceived to originate from an origin location in the virtual reality space, the audio track associated with an object viewable in the video imagery, the object having a known location in the virtual reality space;
provide for audio presentation of the audio track with one or more of;
   (i) a spatial audio effect that places the origin location of the audio track at a point on or within a boundary of the object and provides for movement of the origin location along or within the boundary of the object based on changes in a view point of the video imagery relative to the object; and
   (ii) a spatial audio effect that places the origin location over a region extending across at least part of the boundary of the object viewable in the video imagery.

In one or more embodiments, the apparatus is caused to provide for audio presentation of the audio track with a spatial audio effect that places the origin location of the audio track at a point on a boundary of the object and provides for movement of the origin location along the boundary of the object based on changes in a view point of the video imagery relative to the object.

In one or more embodiments, the apparatus is caused to provide for audio presentation of the audio track with a spatial audio effect that places the origin location of the audio track at a point on a boundary of the object and provides for one or more of:
movement of the origin location along the boundary of the object based on changes in a view point of the video imagery relative to the object; and
movement of the origin location between each of a plurality of surfaces that form the boundary of the object based on changes in a view point of the video imagery relative to the object.

In one or more embodiments, the apparatus being caused to provide for audio presentation of the audio track with a spatial audio effect that places the origin location of the audio track at a point on a surface of the object and provides for movement of the origin location along the surface of the object based on changes in a view point of the video imagery relative to the object, comprises identifying a point on the surface of the object within a threshold distance to the view point of the video imagery and providing for placement of the original location at the identified point.

In one or more embodiments, the apparatus being caused to provide for audio presentation of the audio track with a spatial audio effect that places the origin location of the audio track at a point on a surface of the object and provides for movement of the origin location between each of a plurality of surfaces of the object based on changes in a view point of the video imagery relative to the object, comprises identifying which of the plurality of surfaces of the object is within a threshold distance of the view point of the video imagery and providing for placement of the original location at a point on the identified surface.

In one or more embodiments, the apparatus provides for identification of a point on the boundary of the object closest to the view point of the video imagery and provides for placement of the original location at the identified point.

In one or more embodiments, the boundary is defined by a plurality of surfaces and the apparatus is caused to identify one of the plurality of surfaces that is visible in the virtual reality view and provide for audio presentation of the audio track with a spatial audio effect that places the origin location over the region defined by the identified surface.

In one or more embodiments, the boundary is defined by a plurality of surfaces and the apparatus is caused to identify one of the plurality of surfaces that is closest to the view point of the video imagery and provide for audio presentation of the audio track with a spatial audio effect that places the origin location over the region defined by the identified closest surface.

In one or more embodiments, the apparatus is configured to determine the location of the object in the virtual reality space based on 3-dimensional model information that is associated with the virtual reality content.

In one or more embodiments, the 3-dimensional model information may comprise complete or partial virtual models of one or more objects in the scene captured in the VR content. In one or more examples, the 3-dimensional model information comprises one or more of depth information such as from the view point of the VR content capture device that captured the video imagery of the scene and three-dimensional model information, such as from a building or city plan.

In one or more embodiments, the apparatus is configured to determine the location of one or more surfaces of the object in the virtual reality space based on 3-dimensional model information that is associated with the virtual reality content.

In one or more embodiments, the object comprises a three-dimensional object that appears in the video imagery and at least part of the boundary of the three-dimensional object is known to the apparatus by one or more of:
predetermined information defining at least one or more boundary surfaces of the object;
image analysis for identifying the boundary of an object as it appears in the video imagery; and
depth information obtained from a VR content capture device used to capture the virtual reality content.

In a second example aspect there is provided method, the method comprising:
in respect of virtual reality content comprising video imagery, the video imagery presented in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on the virtual reality content including at least one audio track comprising audio that is for audible presentation to a user with a spatial audio effect configured such that the audio is audibly perceived to originate from an origin location in the virtual reality space, the audio track associated with an object viewable in the video imagery, the object having a known location in the virtual reality space;
providing for audio presentation of the audio track with one or more of;
   (i) a spatial audio effect that places the origin location of the audio track at a point on or within a boundary of the object and provides for movement of the origin location along or within the boundary of the object based on changes in a view point of the video imagery relative to the object; and
   (ii) a spatial audio effect that places the origin location over a region extending across at least part of the boundary of the object viewable in the video imagery.

In a third example aspect there is provided computer readable medium comprising computer program code stored thereon, the computer readable medium and computer program code being configured to, when run on at least one processor, perform the method of.
in respect of virtual reality content comprising video imagery, the video imagery presented in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on the virtual reality content including at least one audio track comprising audio that is for audible presentation to a user with a spatial audio effect configured such that the audio is audibly perceived to originate from an origin location in the virtual reality space, the audio track associated with an object viewable in the video imagery, the object having a known location in the virtual reality space;
providing for audio presentation of the audio track with one or more of;
(i) a spatial audio effect that places the origin location of the audio track at a point on or within a boundary of the object and provides for movement of the origin location along or within the boundary of the object based on changes in a view point of the video imagery relative to the object; and
(ii) a spatial audio effect that places the origin location over a region extending across at least part of the boundary of the object viewable in the video imagery.

In a fourth example aspect there is provided an apparatus comprising:
at least one processor; and
at least one memory including computer program code,
the at least one memory and the computer program code configured to, with the at least one processor, cause the apparatus to perform at least the following:
in respect of virtual reality content comprising video imagery, the video imagery for presentation in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on at least one audio track comprising audio that is for audible presentation to a user with a spatial audio effect such that it is audibly perceived to originate from an origin location in the virtual reality space, and a user selection of an object viewable in the video imagery, the object having a known location in the video imagery;
provide for association of the audio track with the object.

In one or more embodiments, the apparatus is caused to provide for association of the audio track with one or more of;
an area defining a boundary of the object;
a volume defining the boundary of the object;
the boundary of the object; and
at least one of a plurality of surfaces that form the boundary of the object.

In one or more embodiments, the object comprises a plurality of surfaces that form the boundary of the object and the apparatus provides for visual identification of said plurality of surfaces to enable user selection of at least one of the plurality of surfaces for association of the audio track therewith.

In one or more embodiments, the apparatus is configured to provide visual identification of said plurality of surfaces based on 3-dimensional model information of at least one or more objects viewable in the video imagery.

In a fifth example aspect there is provided a method, the method comprising:
in respect of virtual reality content comprising video imagery, the video imagery for presentation in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on at least one audio track comprising audio that is for audible presentation to a user with a spatial audio effect such that it is audibly perceived to originate from an origin location in the virtual reality space, and a user selection of an object viewable in the video imagery, the object having a known location in the video imagery;
providing for association of the audio track with the object.

In a sixth example aspect there is provided a computer readable medium comprising computer program code stored thereon, the computer readable medium and computer program code being configured to, when run on at least one processor, perform the method of:
in respect of virtual reality content comprising video imagery, the video imagery for presentation in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on at least one audio track comprising audio that is for audible presentation to a user with a spatial audio effect such that it is audibly perceived to originate from an origin location in the virtual reality space, and a user selection of an object viewable in the video imagery, the object having a known location in the video imagery;
providing for association of the audio track with the object.

In a seventh example aspect there is provided an apparatus comprising:
in respect of virtual reality content comprising video imagery, the video imagery presented in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on the virtual reality content including at least one audio track comprising audio that is for audible presentation to a user with a spatial audio effect configured such that the audio is audibly perceived to originate from an origin location in the virtual reality space, the audio track associated with an object viewable in the video imagery, the object having a known location in the virtual reality space;
means for providing for audio presentation of the audio track with one or more of;
   (i) a spatial audio effect that places the origin location of the audio track at a point on or within a boundary of the object and provides for movement of the origin location along or within the boundary of the object based on changes in a view point of the video imagery relative to the object; and
   (ii) a spatial audio effect that places the origin location over a region extending across at least part of the boundary of the object viewable in the video imagery.

In an eighth example aspect there is provided an apparatus comprising:
in respect of virtual reality content comprising video imagery, the video imagery for presentation in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space; and
based on at least one audio track comprising audio that is for audible presentation to a user with a spatial audio effect such that it is audibly perceived to originate from an origin location in the virtual reality space, and a user selection of an object viewable in the video imagery, the object having a known location in the video imagery;
means for providing for association of the audio track with the object.

The present disclosure includes one or more corresponding aspects, examples or features in isolation or in various combinations whether or not specifically stated (including claimed) in that combination or in isolation. Corresponding means and corresponding functional units (e.g., function enabler, video imagery extractor, video imagery compiler, viewing direction measurer, viewing direction modifier, video player, direction sensor) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
- figure 1: illustrates an example embodiment of an apparatus;
- figure 2: illustrates an example view of a scene for capture in virtual reality;
- figure 3: illustrates an example virtual reality view;
- figure 4: illustrates an example view of a scene for capture in virtual reality;
- figure 5: illustrates an example view of a scene for capture in virtual reality
- figure 6: shows a flowchart illustrating an example method;
- figure 7: shows a flowchart illustrating an example method; and
- figure 8: shows a computer readable medium.

### Description of Example Aspects

Virtual reality (VR) may use a headset, such as glasses or goggles, or one or more displays that surround a user to provide a user with an immersive virtual experience. A virtual reality apparatus may present multimedia virtual reality content representative of a virtual reality space to a user to simulate the user being present within the virtual reality space. The virtual reality space may replicate a real world environment to simulate the user being physically present at a real world location or the virtual reality space may be computer generated or a combination of computer generated and real world multimedia content. The virtual reality space may be provided by video imagery, such as a panoramic video. The video imagery may comprise a video having a wide or 360° field of view (which may include above and/or below a horizontally oriented field of view). The virtual reality space may thus provide a virtual 3-dimensional environment in which the video imagery of the VR content is provided for display. A user may be provided with a spatial subset of the virtual reality space as their VR view, i.e. a view port to view the video imagery of the VR space. The virtual reality apparatus may provide for user interaction with the virtual reality space displayed. The virtual reality content provided to the user may comprise live or recorded images of the real world, captured by a virtual reality content capture device such as a panoramic video capture device or virtual reality content capture device, for example. One example of a virtual reality content capture device is a Nokia OZO camera. The virtual reality space may provide a 360° or more field of view and may provide for panning/rotating around said field of view based on movement of the VR user's head or eyes. The virtual reality view of a virtual reality space may be provided to said user by virtual reality apparatus via displays in the headset. The virtual reality space may appear to the user of the VR apparatus as a three dimensional space created from images of the virtual reality content. Thus, the VR content may comprise images taken in multiple viewing directions that can be displayed and arranged together to form a (uninterrupted, continuous) wrap around field of view.

Virtual reality content may, by its nature, be immersive and may thereby comprise a large amount of data. The virtual reality content may comprise video imagery (i.e. moving images) that have a large spatial extent, such as to surround the user. The virtual reality view provided to the user may only cover an area of the video imagery smaller than the total area and the user may need to move the virtual reality view around to appreciate the whole spatial extent of the virtual reality space that the video imagery covers.

VR content may be presented with spatial audio, otherwise known as three dimensional audio or directional audio, which presents audio to a user (consumer) of virtual reality such that the user perceives the audio as originating from a particular direction relative to the VR content. While stereo sound may comprise two channels with one channel provided to each ear provides an element of left-right directionality, spatial audio may use head-related transfer functions to virtually position the source of the audio such that it is perceived to originate from a particular position in space. The relative volume and relative timing of the presentation of audio to each ear may provide for virtual positioning of the perceived origin location or source of the audio in space.

The audio presented to a user consuming VR content may comprise ambient or non-directional audio such as background sounds or music which is perceived as not coming from a particular direction and directional audio which is perceived by the user as originating from a particular direction. It will be appreciated that events in the virtual reality content generate accompanying audio, such as characters speaking, cars revving, hockey pucks being struck. Thus, the voice of a character speaking who visually appears to the left of the user's virtual reality view may be presented as directional audio originating from that left-hand side.

However, it may be desirable to add an audio track, comprising audio over time, to the VR content that was not generated by sounds occurring in the scene when the VR content was captured. Accordingly such an audio track may not have any direction relative to the VR content associated with it. For example, the audio track may be recorded before, during or after capturing of the scene by one or more VR content capture devices. The audio of the audio track may comprise audio commentary or be an element of a special effect applied during post production or for any other purpose. It may be desirable to present the audio track with directional audio. However, given that the audio track may comprises audio recorded separately from the capture of the VR content, the audio track may need to be assigned a direction from which it will be perceived to originate when the VR content is watched. An appropriate audio effect, in accordance with the assigned direction, may then be applied to the audio track when it is audibly presented to the user.

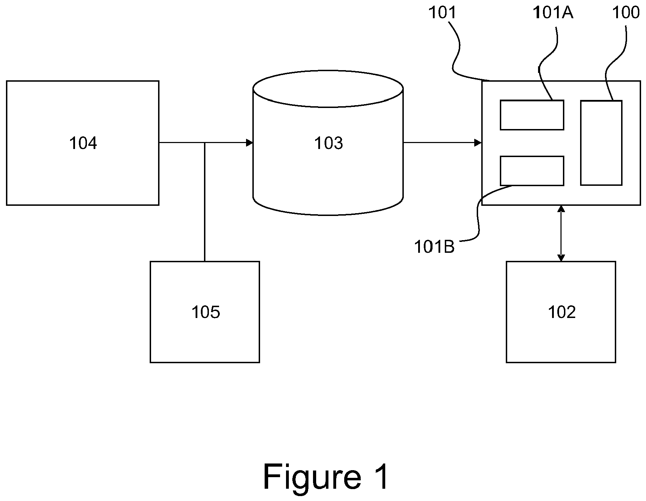

Figure 1 shows an apparatus 100 configured to provide for audio presentation of an audio track with a spatial audio effect based on the association of the audio track with an object viewable in the video imagery. Thus, a user may therefore hear the audio of the audio track as if it originates from the object, as described below.

The apparatus 100 may be part of a virtual reality device 101 configured to present the virtual reality content to a user. The virtual reality device 101 may present a VR view of a VR space to a user via a VR display 102, which may comprise a headset. The VR view provided to the user on the VR display 102 may be based on the orientation of the VR display, such that a user can look around the VR space by moving their head. It will be appreciated that other types of display and other means to "look around" the virtual reality space may be provided. In some examples, the apparatus 100 is functionally provided by a computer, the virtual reality device 101 or a computer server, each of which may comprise a memory 101A and at least one processor 101 B, although in other examples the apparatus may be an electronic device, such as a computer, mobile telephone or other apparatus as listed hereinafter in communication with the VR device 101. The virtual reality device 101, in this example, is configured to receive virtual reality content from a virtual reality content store 103 where virtual reality content is stored (which may include being stored transiently or temporarily). Thus, the virtual reality content may be live content and the store 103 may be a memory or buffer of a display or onward transmission path. The apparatus 100 may receive indications of where the user is looking in the virtual reality space and the location of the objects in the VR space to which the audio tracks relates. The audio track may be associated with the object visible in the VR content by an apparatus 105.

The VR content may be provided by a virtual reality content capture device 104. The apparatus 105 may comprise an apparatus for use in production or editing of the VR content. The apparatus 105 may provide an interface for associating the audio track with objects in the VR content, wherein the association may be stored with the audio track and/or VR content in the VR content store 103. In one or more examples, the apparatus 100 is functionally provided by a computer or a computer server, each of which may comprise a memory and at least one processor (not shown), similar to that described for the apparatus 100.

In this embodiment the apparatus 100 or apparatus 105 mentioned above may have only one processor 101 B and one memory 101A but it will be appreciated that other embodiments may utilise more than one processor and/or more than one memory (e.g. same or different processor/memory types). Further, the apparatus 100, 105 may be an Application Specific Integrated Circuit (ASIC).

The processor may be a general purpose processor dedicated to executing/processing information received from other components, such as from content store 103 and/or VR device 101 for apparatus 100 and VR content capture device 104 for apparatus 105, in accordance with instructions stored in the form of computer program code in the memory. The output signalling generated by such operations of the processor is provided onwards to further components, such as the VR apparatus 101 for audible presentation of the audio track or to the VR content store 103 for storing of an object-associated audio track.

The memory (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example the processor and memory are all electrically connected to one another internally to allow for electrical communication between the respective components. In this example the components are all located proximate to one another so as to be formed together as an ASIC, in other words, so as to be integrated together as a single chip/circuit that can be installed into an electronic device. In some examples one or more or all of the components may be located separately from one another.

In Figure 1, the apparatus for associating an audio track with virtual reality content (performed by apparatus 105) is shown as well as the apparatus for providing for audio presentation of the audio track with a particular spatial audio effect (performed by apparatus 100) for appreciation of the whole system. However, it will be appreciated that the association of an audio track with an object in the virtual reality content may be performed and the resultant VR content with associated audio track, which may be provided to store 103, may be viewed by many different VR devices 101 and associated apparatuses 100 for the provision of audio of the audio track with a particular spatial audio effect based on the association.

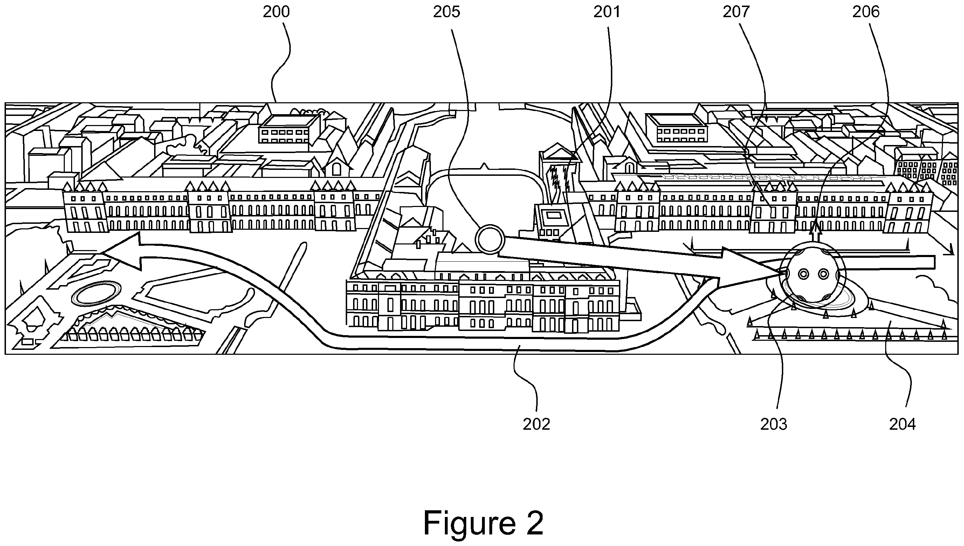

Figure 2 shows a scene 200 that is captured for presentation in virtual reality of the Palace of Versailles. The virtual reality content may comprise a documentary about the Palace of Versailles, although it will be appreciated that the VR content may be about any topic. The scene includes an object 201 comprising the Palace.

An arrow shows a path 202 taken by a virtual reality content capture device 203 as it captures video imagery for presentation in virtual reality. The video imagery comprises imagery covering all viewing directions (or substantially all) relative to the content capture device. Thus, a user watching the captured virtual reality content will be able to look around at the Palace 201 and gardens 204 as the view point of the video imagery progresses along the path 202 over time. Accordingly, the view point comprises the location from which the video imagery was captured at a particular time relative to the location of an object. At each view point the user may be able to look in many different viewing directions to see the video imagery that was captured of the scene around the view point.

It may be desirable to provide commentary as an audio track to accompany the video imagery. It will be appreciated that the audio track may comprise audio other than commentary. The audio track may have been recorded in advance, during or after the capture of the video imagery. The audio track may have been recorded separately from any audio captured at the scene by the VR content capture device 203. It may be desirable to provide for audible presentation of the audio track, perhaps as well as audio captured by the VR content capture device 203. The audio track in this example is about the object (Palace) 201 and it may be desirable to provide for audible presentation of the audio track with a spatial audio effect that associates the audio with the object. Accordingly, the spatial audio effect may provide for the perception that audio of the audio track originates at a point 205 comprising the Palace 201. However, the presentation of audio in this way may be confusing when the video imagery is captured from a distance close to the object (for example, below a threshold distance) or when the video imagery is captured of an object that covers a large area of the video imagery, such as more than a threshold ratio of area of the object in the video imagery to the area of the video imagery viewable in the virtual reality view at any one time.

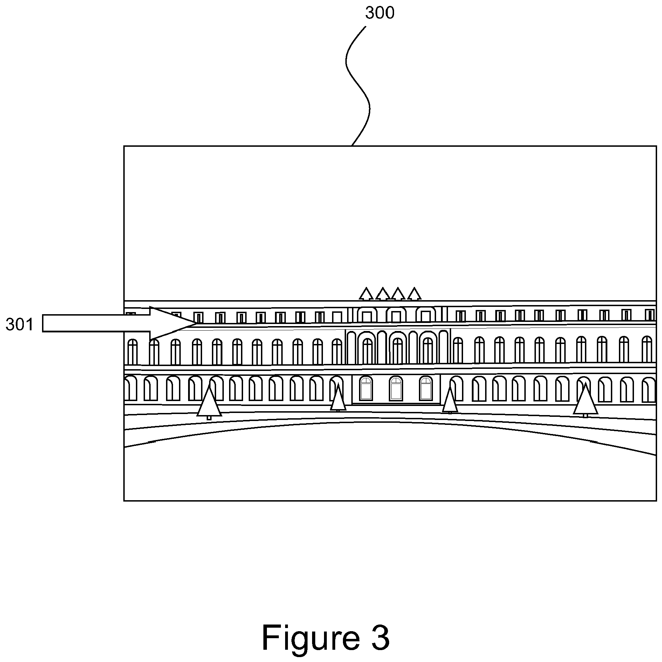

Figure 3 illustrates a virtual reality view 300 presented to the user based on the video imagery captured by the VR content capture device 203 at the view point at which it is shown in Figure 2 and with a viewing direction shown by arrow 206. The VR view 300 comprises the portion of the Palace 201 labelled 207 in Figure 2. With the audio track having an audio effect applied such that it is perceived to originate from point 205, it will be heard by the user presented with VR view 300 from their left side, illustrated by arrow 301. Thus, despite the user looking directly at the Palace 201, the commentary or audio track appears to originate not from the Palace but from a different direction, despite point 205 being in the centre of the Palace 201. Thus, the presentation of an audio track with a spatial audio effect may be difficult to implement for objects 201 of a particular area or that are captured from a particular distance, as mentioned above.

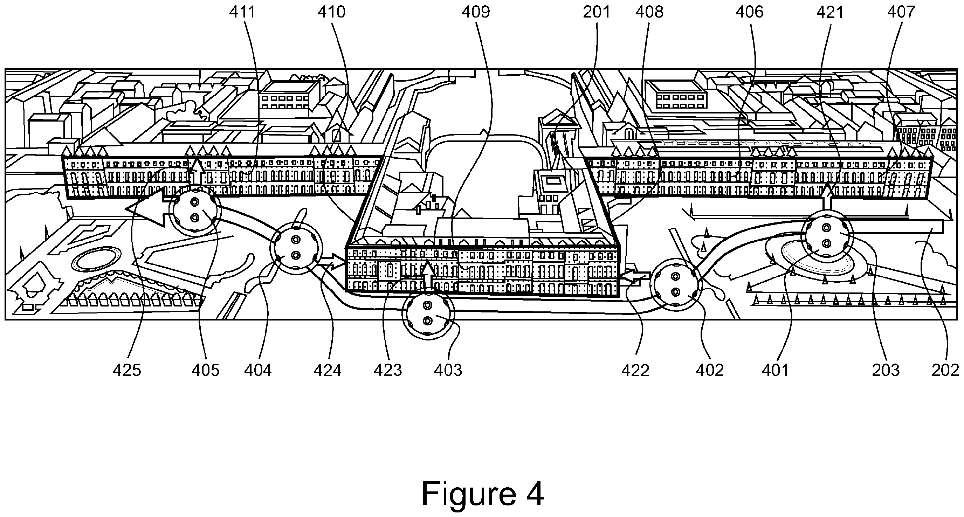

Figure 4 shows the same scene of the Palace (the object in the VR imagery) 201 and wherein during capture of the video imagery of the VR content the VR content capture device 203 has followed the same path 202 illustrated by the arrow. In this example, the same VR content capture device 203 is shown at several view points 401, 402, 403, 404, 405 along the path 202 during its progression therealong. Again, the audio track has been associated with the Palace and may be about the Palace, such as commentary.

In this example, the audio track is provided for audible presentation with a spatial audio effect which places the origin location of the audio track at a point on or within a boundary 406 of the object 201 and provides for movement of the origin location along or within the boundary of the object based on changes in a view point 401, 402, 403, 404, 405 of the video imagery relative to the object 201. Accordingly, the apparatus 100 may provide for audible presentation of the audio of the audio track such that it is perceived to originate from the object 201 but not from a fixed origin location within the object or on its boundary but instead from an origin location that lies on or within the boundary of the object and that is moved based on where the view point of the video imagery is currently located.

The origin location of the audio track may be moved in a step wise manner with movement of the view point 401, 402, 403, 404, 405 or continuously with the movement of the view point 401, 402, 403, 404, 405. The origin location may be placed at location on or within the boundary of the object that is closest to the current view point 401, 402, 403, 404, 405. In one or more examples, the object may be divided into a plurality of sections (either automatically by the apparatus 100 based on its size and/or distance or based on predetermined sections). The origin location may be placed at a location within one of the predetermined sections of the object that is closest to the current view point 401, 402, 403, 404, 405.

The boundary of an object may comprise a surface that delimits the object from other objects or free space. For example, for a building, the boundary may comprise the outside walls of the building. For example, for a defined area, such as a park or football field, the boundary may comprise a region at the perimeter of the park or football field. For example, for a person or animal, the outside surface of the animal or person may comprise the boundary. In some examples, an approximation of the object may be used to define the boundary. For example, a bounding geometric shape that may fit around the object 201 may be used as an approximation of the boundary.

In the example of Figure 4, the object 201 is identified to have a plurality of surfaces 407, 408, 409, 410, 411 that define some of the walls of the Palace 201. The surfaces 407, 408, 409, 410, 411 may be determined from a three-dimensional model of the object. In one or more examples, the three-dimensional model may be obtained from one or more of predetermined model data provided to the apparatus 100, 105, image analysis of the video imagery to derive the shape/boundaries of objects therein, and depth information obtained from the VR content capture device 203. The depth information may comprise information indicative of how far away objects are from the VR content capture device from the view point of the VR content capture device. The depth information, which may be collated with depth information from different view points, may provide for the derivation of models of objects visible in the video imagery. The surfaces may be identified by any appropriate algorithm to identify the shape of an object from a model or the model itself may include information that designates its surfaces.

In the example described in relation to Figure 4, the apparatus 100 is configured to provide for audio presentation of the audio track with a spatial audio effect that places the origin location of the audio track at a point on one of the surfaces 407, 408, 409, 410, 411 of the object 201 and provides for movement of the origin location along one or more of surfaces 407, 408, 409, 410, 411 of the object based on changes in a view point 401, 402, 403, 404, 405 of the video imagery relative to the object.

In one or more examples, the apparatus 100 may be caused to identify a point on one or more of the surfaces of the object within a threshold distance to the view point of the video imagery and provide for placement of the original location at the identified point. Accordingly, the origin location moves along the boundary or surface(s) based on the view point.

In one or more examples, the apparatus 100 may be caused to identify which of the plurality of surfaces 407, 408, 409, 410, 411 is closest or within a threshold distance of the current view point 401, 402, 403, 404, 405 of the video imagery and provide for placement of the origin location at a fixed point on the identified surface, such as at the centre of the surface or other point thereon. Accordingly, the origin location moves between surfaces based on the view point.

The origin location may be placed at location on a boundary surface of the object that is closest to the current view point 401, 402, 403, 404, 405.

At each of the view points 401, 402, 403, 404, 405 an arrow is shown designated 421, 422, 423, 424, 425 respectively which illustrates the direction from which the user hears the audio track. Thus, the origin location provided by the spatial audio effect is shown, in this example, to move along each of the surfaces with the view point such that the origin location is positioned at the closest position on one of the surfaces to the current view point.

In the above examples, the audio track is associated with the object 201 and the apparatus 100 provides for application of an appropriate spatial audio effect to the audio track based on the view point of the video imagery relative to that object. However, in one or more examples the audio track may include more information than just the object 201 to enable application of an appropriate spatial audio effect. For example, the audio track may be associated with information that designates different parts of the object over time, such as the above-mentioned sections or surfaces. The information may be provided by apparatus 105. Accordingly, the apparatus 100 may not be required to determine the surface or section with which to place the origin location of the audio as this information may be provided with the audio track or VR content having been generated by the apparatus 105. The apparatus 100 may therefore, in this example, provide for audible presentation of the audio track with a spatial audio effect based on the information provided by the apparatus 105.

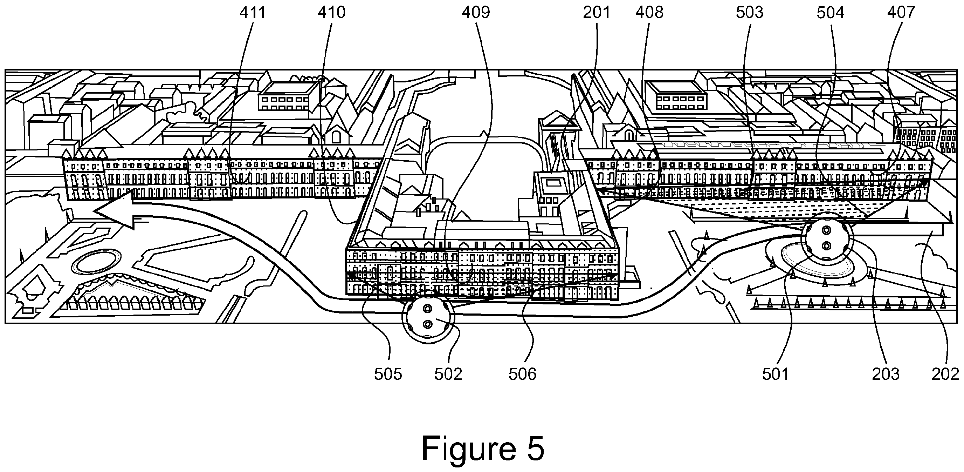

Figure 5 shows a further example of a spatial audio effect applied to "object assigned audio tracks". Figure 5 shows the same scene of the Palace (the object in the VR imagery) 201 and wherein during capture of the video imagery of the VR content the VR content capture device 203 has followed the same path 202 illustrated by the arrow. In this example, the same VR content capture device 203 is shown at several view points 501, 502 along the path 202 during its progression therealong. Again, the audio track has been associated with the Palace and may be about the Palace, such as commentary.

As in the previous example, the object 201 is identified to have a plurality of surfaces 407,408, 409, 410, 411 that define some of the walls of the Palace 201. As before, the surfaces 407, 408, 409, 410, 411 may be determined from a three-dimensional model of the object, which may be performed by the apparatus 100 or the apparatus 100 may be provided with information regarding the location of the surfaces.

In the examples above, the origin location was a point, however in this example the origin location is a region. Accordingly, the spatial audio effect is such that the audio of the audio track is perceived to originate from a region rather than a single point. The region may be implemented as multiple points arranged together over the region or as one-dimensional, two-dimensional or three-dimensional origin location that forms the region.

In this example, the region comprises one or more of the surfaces 407, 408, 409, 410, 411 of the object 201. At view point 501 the spatial audio effect is applied to cause the perception that the audio originates from the region defined by surface 407. At view point 502 the spatial audio effect is applied to cause the perception that the audio originates from the region defined by surface 409. It will be appreciated that the other surfaces may comprise the regions from which audio is perceived at view points other than those exemplified by 501 and 502.

Thus, based on the virtual reality content including at least one audio track comprising audio that is for audible presentation to a user with a spatial audio effect such that it is audibly perceived to originate from an origin location in the virtual reality space, the audio track associated with the object 201 viewable in the video imagery, the object having a known location in the virtual reality space, the apparatus 100 is caused to provide for audio presentation of the audio track with a spatial audio effect that places the origin location over a region 407, 408, 409, 410, 411 extending across at least part of the boundary of the object viewable in the video imagery.

At each of the view points 501, 502, a pair of arrows is shown designated 503, 504 and 505, 506 respectively which illustrates the range of directions from which the user hears the audio of the audio track simultaneously.

In one or more examples, the origin location provided by the spatial audio effect is shown, in this example, to extend over the surface (region) 407, 408, 409, 410, 411 that is positioned at a position closest to the current view point 501, 502. The apparatus 100 may determine which of the plurality of surfaces 407, 408, 409, 410, 411 is closest to the current view point 501, 502 or it may be provided with this information by a different apparatus.

Thus, in summary, the origin location may comprise a point and that point may be moved within the boundary of an object, along its surface, between surfaces in a continuous or step wise manner based on the view point of the video imagery relative to the object. The origin location may be positioned such that the audio track appears to originate from the object within a predetermined distance of the current view point. The origin location may extend over a region, such as over one or more of a plurality of surfaces of the object and may be moved between surfaces in a continuous or step wise manner based on the view point of the video imagery relative to the object. The origin location may be positioned such that the audio track appears to originate from the object within a predetermined distance of the current view point.

The apparatus 100 may be configured to determine whether to provide such a movable origin location or a fixed origin location independent of the view point based on one or more of the distance between the view point and the object and the size of the object. For example, in situations where the object is small or far away from the view point, the movement of the origin location may be unnecessary.

In all of the examples, the apparatus may be configured perform geometrical calculations to identify the position or surface that is closest to the current view point. Various algorithms will be known to those skilled in the art on how to calculate the closest distance between points and lines or planes.

Turning to the apparatus 105, and with reference to Figure 2, based on at least one audio track comprising audio that is for audible presentation to a user with a spatial audio effect that provides the perception that the audio originates from an origin location in the virtual reality space, and a user selection of an object 201 viewable in the video imagery, the object 201 having a known location in the video imagery, the apparatus 105 is caused to provide for association of the audio track with the object 201.

In one or more examples, the association of the audio track with the object 201 may be achieved in various ways. In some examples, the association may comprise tagging the audio track with the name of the object 201 e.g. "Palace of Versailles". It may then be left to the apparatus 100, when providing for audible presentation of the audio track to identify the tagged object in the video imagery, such as by image analysis of the video imagery/object recognition of the video imagery and the known or acquired image of the object/Palace of Versailles, geographic maps based on geographically tagged VR content or content analysis (semantic for example) of the VR content itself to identify where it was recorded, building or city model information based on geographically tagged VR content or content analysis (semantic for example) of the VR content itself to identify where it was recorded. The apparatus 100 may then provide for appropriate positioning of the origin location.

In one or more examples, the association of the audio track with the object 201 may comprise the apparatus 105 being provided with information about objects present in the VR content and allowing for selection of one of the objects. The apparatus 105 may provide for highlighting or otherwise identifying the objects in the video imagery with selectable elements to provide for user selection of one of the objects to provide for association with the audio track. The audio track may then be tagged with a location, such as a geographic location that can be translated into the location in the video imagery by apparatus 100 or a location in the virtual reality space in which the video imagery is displayed by the VR apparatus 101 or an area or volume that defines the boundary of the object 201. The apparatus 100 with knowledge of the location of the object 201 or the area/volume defining the object 201 may determine any required movement of the origin location with respect to the object.

In one or more examples, the association of the audio track with the object 201 may comprise the apparatus 105 being provided with information about objects present in the VR content and allowing for selection of one of the objects as well as one or more points and/or regions on the object that the origin location may be placed. The audio track may then be tagged with the location(s). The apparatus 100, with knowledge of the locations on the boundary of/within the object may determine any required movement of the origin location between those locations.

In one or more examples, the apparatus 105 is caused to provide for association of the audio track with one or more of; the boundary of the object; and at least one of a plurality of surfaces that form the boundary of the object.

Similar to that shown in Figures 4 and 5, the apparatus 105 may provide for visual identification of a plurality of surfaces 407, 408, 409, 410, 411 in the video imagery to enable user selection of at least one of the plurality of surfaces for association of the audio track therewith. The surfaces may be highlighted or otherwise identified in the video imagery with a selectable graphic element for user selection thereof. The apparatus 105 may be configured to provide for visual identification of said plurality of surfaces based on 3-dimensional model information of at least one or more objects viewable in the video imagery.

The apparatus 105 may provide for selection of one or more audio tracks comprising audio that is for audible presentation to a user with a spatial audio effect such that it is audibly perceived to originate from an origin location in the virtual reality space as well as selection of an object or surface thereof and based on the selection(s), provide for association of one with the other. In one or more examples, it may be advantageous for a sound engineer or other user to select an object (rather than multiple points) that is identified in the scene by the apparatus 105 which may then provide for the audio track to be subsequently audibly presented by apparatus 100 such that the spatial audio effect causes the perception that the origin location is at two or more different locations within the boundary of or on the boundary of the object based on the view point.

The apparatus 105 may provide for associated of one or more setting parameters with the audio track for control of how the apparatus 100 subsequently provides for application of a spatial audio effect. For example, based on a user selection the apparatus 105 may provide for setting of a movement control parameter that defines how accurately the boundary or surfaces thereof are followed based on the view point. For example, the parameter may cause the apparatus 100 to provide for the surface to be followed exactly in accordance with a model of the building with one parameter setting and with a different parameter setting may only roughly follow the general shape of the model or may move along the surface of the model with steps of different granularity levels, such as from surface to surface from a single point on each surface.

For example, based on a user selection the apparatus 105 may provide for setting of one or more of a view-point-following parameter and a spatial-extent parameter. The view-point-following parameter may provide for control of how closely the movement of the origin location along or within the boundary of the object is based on changes in a view point of the video imagery relative to the object. For example, the view-point-following parameter may be used by the apparatus 100 to determine whether the origin location moved over every detail in the boundary of the object or if boundary/surface direction changes above a threshold frequency are smoothed out. The spatial-extent parameter may be used by the apparatus 100 to control the spatial extent of the origin location from a point to an area greater in extent than the point. In one or more examples, one or more parameters may provide for limits on the maximum or minimum size of the origin location. Thus, with a maximum size limit parameter set, when the apparatus 100 determines that the closest surface is a large surface (e.g. 407 or 411) that happens to be greater than the maximum size limit parameter, it may limit the spatial extent of the spatial audio effect to cover only part of the large surface(s).

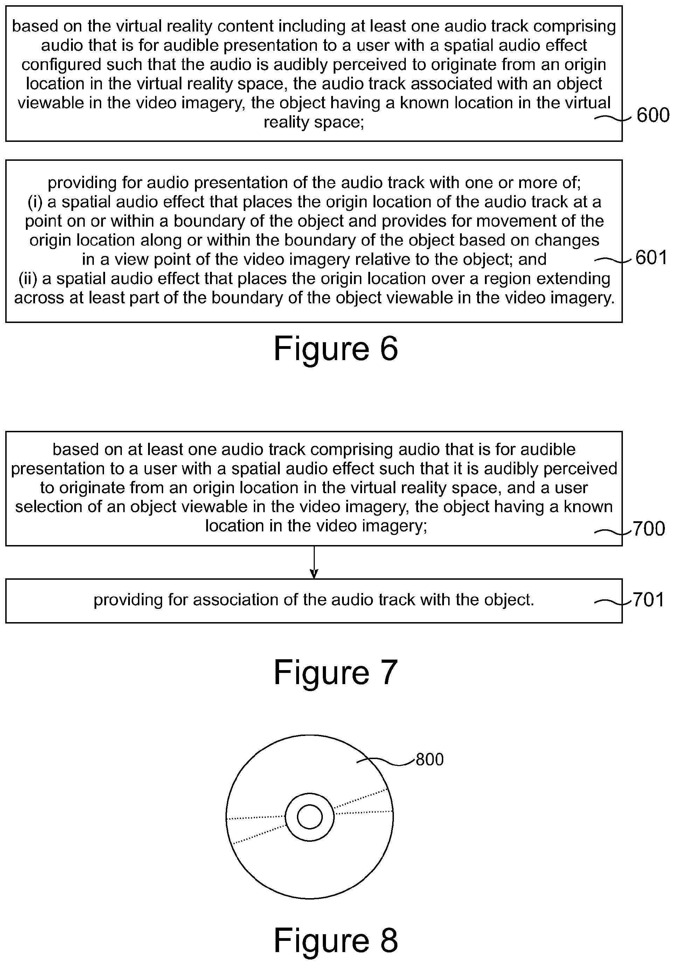

Figure 6 shows a flow diagram illustrating the steps, in respect of virtual reality content comprising video imagery, the video imagery presented in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space; based on 600 the virtual reality content including at least one audio track comprising audio that is for audible presentation to a user with a spatial audio effect configured such that the audio is audibly perceived to originate from an origin location in the virtual reality space, the audio track associated with an object viewable in the video imagery, the object having a known location in the virtual reality space; providing for 601 audio presentation of the audio track with one or more of;
(i) a spatial audio effect that places the origin location of the audio track at a point on or within a boundary of the object and provides for movement of the origin location along or within the boundary of the object based on changes in a view point of the video imagery relative to the object; and
(ii) a spatial audio effect that places the origin location over a region extending across at least part of the boundary of the object viewable in the video imagery.

Figure 7 shows a flow diagram illustrating the steps of, in respect of virtual reality content comprising video imagery, the video imagery for presentation in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space; based on 700 at least one audio track comprising audio that is for audible presentation to a user with a spatial audio effect such that it is audibly perceived to originate from an origin location in the virtual reality space, and a user selection of an object viewable in the video imagery, the object having a known location in the video imagery; providing for 701 association of the audio track with the object.

Figure 8 illustrates schematically a computer/processor readable medium 800 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, a wearable apparatus, a virtual reality apparatus, or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/orfirmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
at least one processor; and
at least one memory including computer program code,
the at least one memory and the computer program code configured to, with the at least one processor, cause the apparatus to perform at least the following:
in respect of virtual reality content comprising video imagery, the video imagery presented in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on the virtual reality content including at least one audio track comprising audio that is for audible presentation to a user with a spatial audio effect configured such that the audio is audibly perceived to originate from an origin location in the virtual reality space, the audio track associated with an object viewable in the video imagery, the object having a known location in the virtual reality space;
provide for audio presentation of the audio track with one or more of;
(i) a spatial audio effect that places the origin location of the audio track at a point on or within a boundary of the object and provides for movement of the origin location along or within the boundary of the object based on changes in a view point of the video imagery relative to the object; and
(ii) a spatial audio effect that places the origin location over a region extending across at least part of the boundary of the object viewable in the video imagery.

2. An apparatus according to claim 1, wherein the apparatus is caused to provide for audio presentation of the audio track with a spatial audio effect that places the origin location of the audio track at a point on a boundary of the object and provides for movement of the origin location along the boundary of the object based on changes in a view point of the video imagery relative to the object.

3. An apparatus according to claim 1 or claim 2, wherein the apparatus is caused to provide for audio presentation of the audio track with a spatial audio effect that places the origin location of the audio track at a point on a boundary of the object and provides for one or more of:
movement of the origin location along the boundary of the object based on changes in a view point of the video imagery relative to the object; and
movement of the origin location between each of a plurality of surfaces that form the boundary of the object based on changes in a view point of the video imagery relative to the object.

4. An apparatus according to claim 1 or claim 2, wherein the apparatus provides for identification of a point on the boundary of the object closest to the view point of the video imagery and provides for placement of the original location at the identified point.

5. An apparatus according to claim 1, wherein the boundary is defined by a plurality of surfaces and the apparatus is caused to identify one of the plurality of surfaces that is visible in the virtual reality view and provide for audio presentation of the audio track with a spatial audio effect that places the origin location over the region defined by the identified surface.

6. An apparatus according to claim 1, wherein the boundary is defined by a plurality of surfaces and the apparatus is caused to identify one of the plurality of surfaces that is closest to the view point of the video imagery and provide for audio presentation of the audio track with a spatial audio effect that places the origin location over the region defined by the identified closest surface.

7. An apparatus according to claim 1, wherein the apparatus is configured to determine the location of the object in the virtual reality space based on 3-dimensional model information that is associated with the virtual reality content.

8. An apparatus according to claim 1, wherein the object comprises a three-dimensional object that appears in the video imagery and at least part of the boundary of the three-dimensional object is known to the apparatus by one or more of:
predetermined information defining at least one or more boundary surfaces of the object;
image analysis for identifying the boundary of an object as it appears in the video imagery; and
depth information obtained from a VR content capture device used to capture the virtual reality content.

9. A method, the method comprising:
in respect of virtual reality content comprising video imagery, the video imagery presented in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on the virtual reality content including at least one audio track comprising audio that is for audible presentation to a user with a spatial audio effect configured such that the audio is audibly perceived to originate from an origin location in the virtual reality space, the audio track associated with an object viewable in the video imagery, the object having a known location in the virtual reality space;
providing for audio presentation of the audio track with one or more of;
(i) a spatial audio effect that places the origin location of the audio track at a point on or within a boundary of the object and provides for movement of the origin location along or within the boundary of the object based on changes in a view point of the video imagery relative to the object; and
(ii) a spatial audio effect that places the origin location over a region extending across at least part of the boundary of the object viewable in the video imagery.

10. A computer readable medium comprising computer program code stored thereon, the computer readable medium and computer program code being configured to, when run on at least one processor, perform the method of.
in respect of virtual reality content comprising video imagery, the video imagery presented in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on the virtual reality content including at least one audio track comprising audio that is for audible presentation to a user with a spatial audio effect configured such that the audio is audibly perceived to originate from an origin location in the virtual reality space, the audio track associated with an object viewable in the video imagery, the object having a known location in the virtual reality space;
providing for audio presentation of the audio track with one or more of;
(i) a spatial audio effect that places the origin location of the audio track at a point on or within a boundary of the object and provides for movement of the origin location along or within the boundary of the object based on changes in a view point of the video imagery relative to the object; and
(ii) a spatial audio effect that places the origin location over a region extending across at least part of the boundary of the object viewable in the video imagery.

11. An apparatus comprising:
at least one processor; and
at least one memory including computer program code,
the at least one memory and the computer program code configured to, with the at least one processor, cause the apparatus to perform at least the following:
in respect of virtual reality content comprising video imagery, the video imagery for presentation in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on at least one audio track comprising audio that is for audible presentation to a user with a spatial audio effect such that it is audibly perceived to originate from an origin location in the virtual reality space, and a user selection of an object viewable in the video imagery, the object having a known location in the video imagery;
provide for association of the audio track with the object.

12. An apparatus according to claim 11, wherein the apparatus is caused to provide for association of the audio track with one or more of;
an area defining a boundary of the object;
a volume defining the boundary of the object;
the boundary of the object; and
at least one of a plurality of surfaces that form the boundary of the object.

13. An apparatus according to claim 11, wherein the object comprises a plurality of surfaces that form the boundary of the object and the apparatus provides for visual identification of said plurality of surfaces to enable user selection of at least one of the plurality of surfaces for association of the audio track therewith.

14. A method, the method comprising:
in respect of virtual reality content comprising video imagery, the video imagery for presentation in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on at least one audio track comprising audio that is for audible presentation to a user with a spatial audio effect such that it is audibly perceived to originate from an origin location in the virtual reality space, and a user selection of an object viewable in the video imagery, the object having a known location in the video imagery;
providing for association of the audio track with the object.

15. A computer readable medium comprising computer program code stored thereon, the computer readable medium and computer program code being configured to, when run on at least one processor, perform the method of:
in respect of virtual reality content comprising video imagery, the video imagery for presentation in a virtual reality space for viewing in virtual reality, wherein a virtual reality view presented to a user provides for viewing of the video imagery, the virtual reality view comprising a spatial portion of the video imagery and being smaller in spatial extent than the spatial extent of the video imagery as presented in the virtual reality space;
based on at least one audio track comprising audio that is for audible presentation to a user with a spatial audio effect such that it is audibly perceived to originate from an origin location in the virtual reality space, and a user selection of an object viewable in the video imagery, the object having a known location in the video imagery;
providing for association of the audio track with the object.
